# FASCICULE DE BREVET EUROPEEN

(11) **EP 2 253 521 B1**
(45) Date de publication et mention de la délivrance du brevet: **04.01.2012**
(21) Numéro de dépôt: 10161190.3
(22) Date de dépôt: 27.04.2010
(51) Int. Cl.: B60T 7/04, B60T 8/00, B60T 8/32, B60T 8/40, B60T 8/44, B60T 8/48, B60T 13/16, B60T 13/52, B60T 13/56

(54) **Servofrein à électrovalve**
Servobremse mit Magnetventil
Brake servo unit with solenoid valve

(30) Priorité: 18.05.2009 FR 0902404
(43) Date de publication de la demande: 24.11.2010
(73) Titulaire: Robert Bosch GmbH, 70442 Stuttgart (DE)
(72) Inventeur: Richard, Philippe, 77500, CHELLES (FR); Fourcade, Jean, 35890, LAILLE (FR)
(74) Mandataire: Hurwic, Aleksander Wiktor

(56) Documents cités:
- EP-A1- 0 435 113
- EP-A2- 0 417 945
- WO-A1-2007/080106
- DE-A1- 3 502 473
- DE-A1- 3 502 474
- DE-A1- 3 640 793
- DE-A1- 4 013 480
- DE-A1- 19 703 776
- FR-A1- 2 698 333
- FR-A1- 2 736 606
- GB-A- 2 161 562

## Description

La présente invention se rapporte à un servofrein à électrovalve. Un exemple d'un tel servofrein est décrit dans DE 197 03 776. Plus particulièrement, l'invention se rapporte à un servofrein comportant une électrovalve extérieure.

Un dispositif de freinage d'un véhicule est généralement commandé par le conducteur au moyen d'une pédale de frein. Celle-ci est destinée à transmettre une force, exercée par le conducteur, à un sous-système de freinage. Ce dernier comprend, par exemple, un étrier équipé d'un piston et de plaquettes de frein destinées à serrer un disque solidaire de la roue à freiner.

Pour amplifier la force transmise depuis la pédale et l'appliquer sur un liquide de frein qui transmet à son tour cette force amplifiée aux étriers de frein, il est connu d'utiliser un servofrein pneumatique d'assistance au freinage.

Dans ce but, un servofrein comporte un boîtier coopérant avec une tige de commande reliée à la pédale de frein. La tige de commande coopère elle-même avec un piston du servofrein et avec une tige de poussée, actionnant un maître-cylindre contenant le liquide de frein.

Le boîtier du servofrein comprend un couvercle, ainsi qu'un cylindre coopérant de manière étanche avec ce couvercle, afin de former un volume interne. Le volume interne est divisé en une première chambre, appelée chambre avant, et une deuxième chambre, appelée chambre arrière. La séparation entre la chambre avant et la chambre arrière est effectuée à l'aide d'une jupe rigide associée à une membrane flexible assurant l'étanchéité entre ces deux chambres. La jupe rigide et la membrane souple sont solidaires en coulissement du piston du servofrein.

Lorsqu'aucun freinage n'est sollicité, la pression dans les chambres est maintenue inférieure à la pression atmosphérique. Une source de dépression est reliée à la chambre avant et un conduit de communication, traversant le piston du servofrein et mettant en communication les deux chambres, est maintenu ouvert afin de garder les deux chambres à une pression inférieure à la pression atmosphérique.

Lorsque le conducteur du véhicule appuie sur la pédale de frein, celle-ci exerce une force sur la tige de commande. Cette force déplace la tige de commande. Le déplacement de la tige de commande active un mécanisme pneumatique, appelé valve trois voies, inclus dans le piston du servofrein, comportant un clapet d'admission d'air et un clapet de communication. Dans un premier temps, l'activation du mécanisme pneumatique coupe la communication entre la chambre arrière et la chambre avant. Dans un deuxième temps, le mécanisme ouvre une communication entre la chambre arrière et une source de fluide, généralement de l'air à pression atmosphérique. L'air à pression atmosphérique pénètre alors dans la chambre arrière. La différence de pression qui résulte du remplissage de la chambre arrière avec de l'air à pression atmosphérique, associée à l'absence de communication entre la chambre arrière et la chambre avant, entraîne la formation d'une différence de pression entre la chambre avant et la chambre arrière. La pression dans la chambre arrière étant alors supérieure à la pression dans la chambre avant, la membrane et la jupe sont soumises à une poussée d'intensité proportionnelle à l'écart de pression entre les deux chambres. Cette poussée entraîne un déplacement de la jupe, de la membrane et du piston de servofrein lié à la jupe. Ce déplacement entraîne une poussée de la tige de poussée sur le piston du maître cylindre qui génère un freinage. Au cours du déplacement de la jupe et du piston de servofrein associé, la force transmise au maître cylindre par la tige poussée est d'intensité supérieure à la l'intensité de la force transmise par la pédale de frein.

Certains servofreins actuels peuvent être sollicités automatiquement sans requérir une quelconque action de la part du conducteur du véhicule. Notamment dans le cas d'un virage, sur une pente, lorsqu'un obstacle est détecté ou lors d'une perte d'adhérence momentanée des roues motrices, par exemple lors de l'activation d'un système de correction automatique de la trajectoire du véhicule de type ESP. De tels servofreins sont alors dénommés servofreins à commande automatique.

Ainsi par exemple, quand certains capteurs situés à différents endroits du véhicule avertissent d'un danger (cas de survirage ou de mouvements brusques du véhicule suite à la présence d'un obstacle sur la route), un calculateur peut envoyer l'ordre d'activer le servofrein à commande automatique.

A cet effet les servofreins à commandes automatiques comportent généralement un dispositif électromécanique permettant de créer une différence de pression entre la chambre avant et la chambre arrière sans activation de la pédale de frein par le conducteur. Ainsi dans le brevet français 9312088, le servofrein comporte une électrovalve extérieure en communication avec le mécanisme du piston du servofrein. Une activation de l'électrovalve entraine la fermeture de la communication entre la chambre arrière et la chambre avant et l'ouverture de la communication entre une arrivée d'air à pression atmosphérique et la chambre arrière.

Il existe par ailleurs des dispositifs de servofreins à électrovalve comportant une division de la chambre arrière. De tels servofreins comportent une chambre arrière séparée en deux parties. Une première partie de la chambre arrière fonctionne de manière classique par activation de la tige de commande par le conducteur. Une deuxième partie, séparée de la première partie de manière étanche, est activée par une électrovalve extérieure à l'aide d'un conduit d'arrivée d'air à pression atmosphérique indépendant.

Cependant, avec de tels dispositifs, une partie des commandes actives d'une valve trois voies est portée par un piston du servofrein et travaille donc sous vide. Le maintien d'un effort afin de conserver un équilibre lors du freinage nécessite un effort plus important de par la différence de dissipation des efforts sous vide et sous pression atmosphérique.

Par ailleurs, un tel dispositif ne permet pas de dissocier les efforts d'entrée de la pression de sortie du servofrein. Pour maintenir un équilibre, il est donc nécessaire de maintenir une force d'entrée sur la tige de commande. Par ailleurs, selon l'écartement des plaquettes par rapport au disque, un pré-remplissage avant freinage peut être nécessaire, par exemple pour éviter la présence d'un couple résiduel. Un tel pré-remplissage se traduit par une course à la pédale, qui est sans effet sur le freinage du véhicule.

Le dispositif selon l'invention prévoit donc une électrovalve externe au servofrein. L'électrovalve selon l'invention comporte une valve trois voies. Typiquement, le dispositif selon l'invention prévoit une électrovalve externe reliée d'une part à la chambre arrière et d'autre part à la chambre avant. De plus, cette électrovalve est reliée à une source de fluide, typiquement à l'air atmosphérique. La valve trois voies de l'électrovalve comporte de manière classique un clapet de communication, permettant l'ouverture ou la fermeture de la communication entre la chambre arrière et la chambre avant. La valve trois voies de l'électrovalve comporte un clapet d'admission permettant l'ouverture ou la fermeture de la communication entre la chambre arrière et la source de fluide. Par ailleurs, l'électrovalve comporte une bobine comportant un noyau. Deux aiguilles sont insérées en force dans ce noyau. Lors de l'activation de la bobine, le noyau se déplace dans l'électrovalve, déplaçant ainsi les aiguilles. Le déplacement des aiguilles entraîne la fermeture ou l'ouverture des clapets de manière classique, c'est à dire similaire à une valve trois voies dans un servofrein classique. Ainsi, l'activation de la bobine entraine dans un premier temps la fermeture du clapet de communication, c'est-à-dire de la communication entre la chambre arrière et la chambre avant, et dans un deuxième temps l'ouverture du clapet d'admission, mettant en communication la chambre arrière et la source de fluide. Selon l'invention, le servofrein ne comporte ainsi plus de dispositif de clapet interne.

Selon l'invention, l'activation de l'électrovalve peut se faire de plusieurs manières. Un premier mode d'activation est appliqué suite à un déplacement de la tige de commande, typiquement suite à une poussée du conducteur sur la pédale de frein. Le déplacement de la tige de commande est alors détecté par un capteur de course de la tige de commande. Ce capteur de course ayant détecté une course de la tige de commande, il active l'électrovalve. Ceci entraîne une montée en pression dans la chambre arrière, ce qui provoque un freinage. Un deuxième mode d'activation de l'électrovalve peut avoir lieu sans intervention sur la pédale de frein, un élément du moteur commandant alors directement une activation de l'électrovalve, par exemple lors d'une application de type fusil radar ou encore lors d'une intervention d'un système de type ESP.

Un mode de réalisation avantageux de l'invention prévoit la présence d'une douille située dans le piston du servofrein, entre le piston primaire du maître cylindre et la tige de commande. L'avancée du piston du servofrein entraîne une montée en pression dans une chambre de pression. Cette montée en pression génère une poussée sur la douille repoussant celle-ci vers la tige de commande, jusqu'au contact entre la douille et la tige de commande. Cette poussée de la douille sur la tige de commande permet d'informer le conducteur d'un montée en pression dans le dispositif selon l'invention, ce qui implique que le véhicule est dans une phase de freinage.

Un mode de réalisation de l'invention peut prévoir l'application d'une loi d'asservissement de position entre la course effectuée par la tige de commande et la pression délivrée dans la chambre arrière. Une telle loi d'asservissement permet de définir, selon les besoins en pression dans le circuit de freinage, une pression délivrée par le servofrein en fonction d'une course de la tige de commande.

Un mode de réalisation avantageux de l'invention prévoit que la loi d'asservissement choisie est modifiable en fonction de la pression dans la chambre de pression. La pression dans la chambre de pression est alors calculée par un capteur de pression. Un tel capteur de pression peut alors être situé sur une section du corps du maître cylindre.

L'invention a donc pour objet un servofrein comportant, depuis une pédale de frein jusqu'à un maître cylindre, une tige de commande coulissant suivant un axe de coulissement, une chambre arrière et une chambre avant séparées de manière étanche par une jupe rigide et une membrane souple, une électrovalve située à l'extérieur du servofrein, caractérisé en ce que l'électrovalve comporte une valve trois voies comportant un clapet d'admission, mettant en communication la chambre arrière et une source de fluide, et un clapet de communication mettant en communication la chambre avant et la chambre arrière, l'électrovalve est reliée par un premier conduit à la chambre arrière et par un deuxième conduit à la chambre avant, le servofrein comporte un capteur de course de la tige de commande, le capteur de course étant relié à l'électrovalve et commandant une activation de l'électrovalve.

Un mode préférentiel de réalisation de l'invention prévoit que l'électrovalve est activée soit par le capteur de course soit par un élément externe.

Un mode préférentiel de réalisation de l'invention prévoit que le servofrein comporte un piston de servofrein solidaire en coulissement de la jupe, une chambre de pression étant délimitée par le piston de servofrein, un corps du maître cylindre et un piston du maître cylindre, une section annulaire située dans la chambre de pression est appliquée d'une part contre un épaulement du piston du servofrein par un ressort de rappel et d'autre part contre le piston du maître cylindre, la section annulaire recouvre de manière étanche une douille mobile en coulissement située en vis à vis d'une part de la chambre de pression et d'autre part de la tige de commande, cette douille est sous l'action d'un ressort de maintien.

Un mode préférentiel de réalisation de l'invention prévoit que le corps du maître cylindre comporte un capteur de pression.

Un mode préférentiel de réalisation de l'invention prévoit que l'augmentation de la pression dans la chambre arrière commandée par l'électrovalve est définie par une loi d'activation prédéfinie.

Un mode préférentiel de réalisation de l'invention prévoit que la loi d'activation de l'électrovalve est modifiable en fonction de la pression dans la chambre de pression détectée par le capteur de pression.

L'invention a par ailleurs pour objet un dispositif de freinage comportant un servofrein selon l'invention, des plaquettes de freins et un disque de freinage, caractérisé en ce que les plaquettes de freins sont soumises à l'action d'un moyen de rappel écartant les plaquettes du disque, de telle sorte qu'au repos les plaquettes ne soient pas en contact avec le disque.

L'invention concerne par ailleurs un procédé de fabrication d'un dispositif de freinage, caractérisé en ce qu'il comporte un servofrein selon l'invention.

L'invention sera mieux comprise à la lecture de la description qui suit et à l'examen de la figure qui l'accompagne. Celle-ci n'est présentée qu'à titre indicatif et nullement limitatif de l'invention. La figure montre une vue en coupe d'un servofrein selon l'invention.

Les références annotées suivantes seront utilisées dans la figure et la description ci dessous.
1 - Servofrein
2 - Pédale de frein
3 - Maître cylindre
4 - Tige de commande
5 - Axe de coulissement de la tige de commande 4
6 - Chambre arrière
7 - Chambre avant
8 - Jupe rigide
9 - Membrane souple
10 - Capteur de course de la tige de commande 4
11 - Électrovalve
12 - Premier conduit
13 - Deuxième conduit
14 - Electroaimant
15 - Noyau
16 - Première aiguille
17 - Deuxième aiguille
18 - Axe de coulissement du noyau 15
19 - Valve trois voies
20 - Clapet d'admission
21 - Premier siège de clapet
22 - Source de fluide à une pression supérieure
23 - Clapet de communication
24 - Deuxième siège de clapet
25 - Premier ressort de clapet
26 - Deuxième ressort de clapet
27 - Piston du servofrein 1
28 - Chambre de pression
29 - Corps du maître cylindre
30 - Piston du maître cylindre
31 - Section annulaire
32 - Epaulement du piston 27
33 - Douille
34 - Ressort de maintien
35 - Capteur de pression
36 - Ressort de rappel

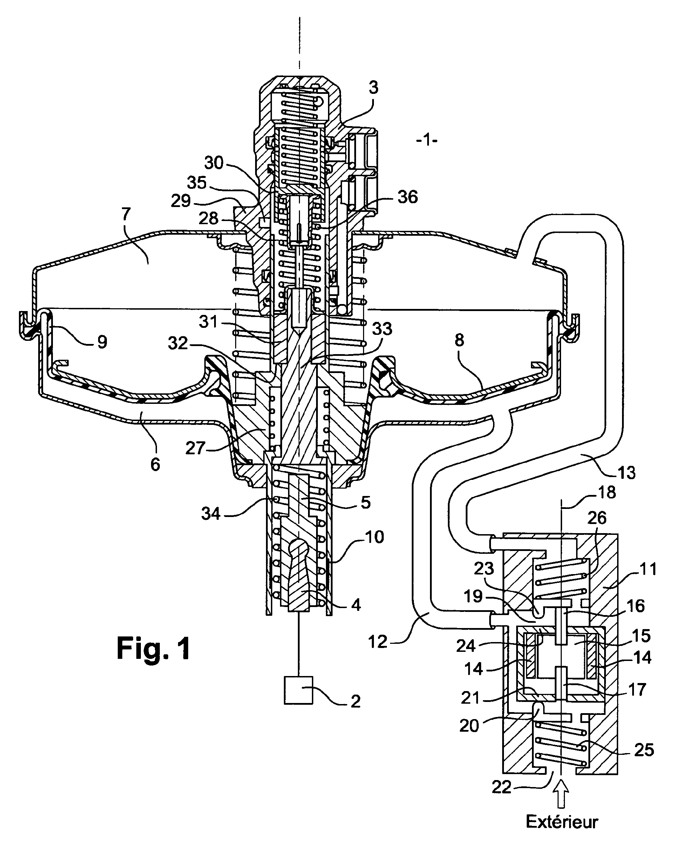

La figure 1 représente une vue en coupe d'un servofrein selon l'invention. Un servofrein 1 selon l'invention comporte de manière classique, depuis une pédale de frein 2 activée par un conducteur jusqu'à un maître cylindre 3, une tige de commande 4. La tige de commande 4 est montée coulissante dans le servofrein 1 suivant un axe de coulissement 5. Le servofrein 1 comporte une chambre arrière 6 et une chambre avant 7. La chambre avant 7 et la chambre arrière 6 sont séparées de manière étanche par une jupe rigide 8 et une membrane souple 9. La chambre avant 7 est en permanence connectée à une source de dépression (non représentée sur la figure).

Contrairement à un servofrein traditionnel, le servofrein 1 selon l'invention ne comporte pas une valve trois voies située à l'intérieur du servofrein 1. Un déplacement de la tige de commande 4, engendré par un effort sur la pédale de frein 2, est selon l'invention capté par un capteur de course 10. Un tel capteur de course 10 peut être un capteur de course 10 classique, par exemple comportant un aimant et un support d'aimant intégré au corps du servofrein 1 détectant une course de la tige de commande 4.

Un tel capteur de course 10 permet, selon l'invention, d'activer une électrovalve 11. Afin de générer une force permettant un freinage du véhicule lors de la détection d'une course de la tige de commande 4, l'électrovalve 11 selon l'invention crée une différence de pression entre la chambre arrière 6 et la chambre avant 7. Le capteur de course 10 est relié à l'électrovalve 11 et commande une activation de l'électrovalve 11 lors d'une avancée de la tige de commande 4.

L'électrovalve 11 selon l'invention est extérieure au servofrein. L'électrovalve 11 est reliée par un premier conduit 12 à la chambre arrière 6. Un deuxième conduit 13 relie la chambre avant 7 à l'électrovalve 11. Cette électrovalve 11 comporte un électroaimant 14 actionnant un noyau 15 mobile en coulissement. Une première aiguille 16 et une deuxième aiguille 17 sont montées en force dans le noyau 15. Ces aiguilles 16 et 17 se développent suivant un axe de coulissement 18 du noyau 15.

Selon l'invention, l'électrovalve 11 comporte une valve trois voies 19 classique. Cette valve trois voies 19 comporte un clapet d'admission 20 associé à un premier siège de clapet 21. Le clapet d'admission 20 associé au premier siège de clapet 21 autorise ou non la communication entre la chambre arrière 6 et une source 22 de fluide, typiquement de l'air à pression atmosphérique. La valve trois voies comporte aussi un clapet de communication 23 associé à un deuxième siège de clapet 24. Le clapet de communication 23 associé au deuxième siège de clapet 24 autorise ou non la communication entre la chambre avant 7 et la chambre arrière 6.

Au repos, c'est à dire lorsque l'électrovalve n'est pas activée, le clapet d'admission 20 est appliqué en contact étanche par un premier ressort de clapet 25 sur le premier siège de clapet 21. Ce contact étanche bloque la communication entre la chambre arrière et la source 22 de fluide à pression atmosphérique. Par ailleurs, la première aiguille maintien le clapet de communication 23 éloigné du deuxième siège de clapet 24, permettant la communication entre la chambre avant 7 et la chambre arrière 6.

Lors d'une activation de l'électrovalve 11, une alimentation de l'aimant génère un déplacement du noyau 15. Le déplacement du noyau 15 provoque le déplacement des aiguilles 16 et 17. Dans un premier temps, la première aiguille 16 se déplace de telle sorte qu'elle ne maintient plus le clapet de communication 23 éloigné du deuxième siège de clapet 24. Un deuxième ressort de clapet 26 amène alors le clapet de communication 23 en contact étanche avec le deuxième siège de clapet 24. Ce contact étanche coupe la communication entre la chambre arrière 6 et la chambre avant 7 *via* le premier conduit 12 et le deuxième conduit 13. Dans un deuxième temps, le déplacement du noyau 15 et de la deuxième aiguille 17 provoque un déplacement du clapet d'admission 20 qui n'est alors plus en contact étanche avec le premier siège de clapet 21. Ce déplacement ouvre la communication entre une source de fluide 22 à haute pression et la chambre arrière 6 via le premier conduit 12.

L'intégration d'une valve trois voies 19 dans l'électrovalve 11 permet de faire travailler tous les éléments de la valve trois voies 19 dans un environnement ayant une pression facilitant la dissipation des calories et donc facilitant le maintien de la position du noyau 15 et l'ouverture et le fermeture respective des clapets d'admission 23 et de communication 20.

Par ailleurs, l'intégration de la valve trois voies 19 directement dans l'électrovalve 11 permet de générer directement une différence de pression entre la chambre arrière 6 et la chambre avant 7 sans qu'un déplacement de la tige de commande 4 ne soit nécessaire. En effet, certains systèmes des véhicules actuels provoquent un freinage du véhicule sans l'intervention du conducteur, par exemple les systèmes de type ESP.

L'invention permet en outre de dissocier les efforts d'entrée dans le servofrein 1 de la montée en pression dans le maître cylindre 3 provoquée par une avancée d'un piston 27 du servofrein 1. En effet un système de type ESP pour provoquer un freinage n'a besoin que d'activer l'électrovalve 11 pour provoquer un freinage, ce freinage pouvant alors avoir lieu sans qu'il n'y ait d'avancée de la tige de commande 4.

De plus, l'utilisation de l'électrovalve 11, afin de contrôler l'admission d'air à pression atmosphérique dans la chambre arrière 6, permet d'adapter le remplissage de la chambre arrière 6 par l'air selon les besoins de l'utilisation faite du servofrein 1. Ainsi, selon une loi d'activation choisie, l'électrovalve 11 permet d'adapter la pression délivrée par le circuit de freinage.

Le dispositif de freinage selon l'invention doit cependant avertir le conducteur du freinage lorsque celui-ci appui sur la pédale 2 de frein. Pour cela, le conducteur doit ressentir une pression sur la pédale 2. Afin de permettre au conducteur de sentir la pression sur la pédale 2 lors d'un freinage, le servofrein 1 selon l'invention comporte de manière classique un piston de servofrein 27. Ce piston 27 de servofrein est solidaire en coulissement de la jupe 8 et de la membrane souple 9.

Une chambre de pression 28 est délimitée par le piston 27 de servofrein, un corps 29 du maître cylindre 3 et un piston 30 du maître cylindre 3.

Une extrémité d'une section annulaire 31 est appliquée contre un épaulement du piston 27 du servofrein 1 par un ressort de rappel 36. Une autre extrémité de la section annulaire 31 est appliquée contre le piston 30 du maître cylindre 3. La section annulaire 31 recouvre de manière étanche une douille 33 mobile en coulissement. Cette section annulaire 31 est située dans la chambre de pression 28. Lors de l'avancée du piston 27, cette section annulaire 31 appui sur le piston 30 du maître cylindre 3 afin de faire monter la pression dans le maître cylindre 3.

La douille 33 est située en vis-à-vis, d'une part de la chambre de pression 28, et d'autre part de la tige de commande 4. Le vis à vis entre la douille 33 et la tige de commande 4 se fait sans contact au repos. La douille 33 est maintenue en position au repos sous l'action d'un ressort de maintien 34. Lors d'une avancée du piston 27 du servofrein 1, la section annulaire 31 est poussée par l'épaulement 32 du piston 27. L'avancée de cette section annulaire 31 et du piston 27 fait monter la pression dans la chambre de pression 28. La montée en pression dans cette chambre de pression 28 applique une force sur la douille 33. Lorsque la pression dans la chambre de pression 28 est supérieure à la pression exercée par le ressort de maintien 34 sur la douille 33, la douille 33 coulisse vers la tige de commande 4 jusqu'au contact entre la douille 33 et la tige de commande 4. Le contact entre la douille 33 et la tige de commande 4 permet au conducteur de ressentir le freinage via la pédale de frein malgré la dissociation de l'effort d'entrée et de la course du piston 27 du servofrein 1. De plus, ce contact se fait de manière progressive, par une différence de pression et non par à-coup.

Avantageusement, il est possible d'adapter la pression délivrée dans le circuit de freinage. Afin d'adapter la pression délivrée dans le circuit de freinage, il est possible de modifier la loi d'admission utilisée pour remplir la chambre arrière 6. Pour faciliter cette modification, l'invention prévoit de placer un capteur de pression 35, par exemple sur le corps du maître cylindre 29. Un tel capteur de pression 35 permet, par exemple, d'informer le dispositif de freinage sur une usure de plaquettes de freinage. En effet une usure des plaquettes entraîne un besoin en pression plus important dans le circuit de freinage afin d'amener les plaquettes au contact d'un disque. Le capteur de pression 35 permet ainsi d'informer d'une augmentation des besoins en pression dans le circuit de freinage afin d'éviter une course morte. Cette augmentation des besoins en pression dans le circuit de freinage peut alors être comblée par une modification de la loi d'admission utilisée par l'électrovalve 11, typiquement par un pré remplissage de la chambre arrière.

Un autre avantage de l'invention est de permettre un positionnement des plaquettes plus éloigné du disque que sur un dispositif de freinage habituel. En effet, afin de réduire un couple résiduel correspondant à une application des plaquettes sur le disque même en absence d'intention de freinage il est nécessaire d'écarter les plaquettes, dans leur position de repos, le plus possible du disque. Un tel écartement doit cependant être comblé lors d'un freinage, c'est à dire que les plaquettes doivent être rapprochées du disque avant qu'il n'y ait un freinage effectif. Sur un dispositif de freinage classique, un tel écartement se répercute par une course effectuée sur la pédale 2 par le conducteur pour combler cet écart sans qu'il n'y ait de freinage effectif. Selon l'invention, la loi d'activation de l'électrovalve 11 peut permettre de combler cet écart sans qu'un conducteur n'ait à continuer à appuyer sur la pédale de frein. L'électrovalve effectue alors un pré-remplissage de la chambre arrière, correspondant à un rapprochement des plaquettes du disque sans que le conducteur n'ait à appuyer plus sur la pédale de frein 2.

## Revendications

1. Servofrein (1) comportant, depuis une pédale (2) de frein jusqu'à un maître cylindre (3),
- une tige de commande (4) coulissant suivant un axe de coulissement (5),
- une chambre arrière (6) et une chambre avant (7) séparées de manière étanche par une jupe rigide (8) et une membrane souple (9),
- une électrovalve (11) située à l'extérieur du servofrein,
- un piston (27) de servofrein solidaire en coulissement de la jupe,
une chambre (28) de pression étant délimitée par le piston de servofrein, un corps (29) du maître cylindre et un piston (30) du maître cylindre,
l'électrovalve comportant une valve trois voies (19) comportant un clapet d'admission (20) mettant en communication la chambre arrière et une source (19) de fluide à une pression supérieure, et un clapet de communication (23) mettant en communication la chambre avant et la chambre arrière,
l'électrovalve étant reliée par un premier conduit (12) à la chambre arrière et par un deuxième conduit (13) à la chambre avant,
le servofrein comportant un capteur de course (10) de la tige de commande, le capteur de course étant relié à l'électrovalve et commandant une activation de l'électrovalve,
**caractérisé en ce qu'**il comporte une section (31) annulaire située dans la chambre de pression, ladite section annulaire étant appliquée d'une part contre un épaulement (32) du piston (27) du servofrein par un ressort de rappel (36) et d'autre part contre le piston (30) du maître cylindre,
la section annulaire recouvrant de manière étanche une douille (33) mobile en coulissement,
la douille, située en vis à vis de la chambre de pression et de la tige de commande, étant maintenue en position au repos sous l'action d'un ressort de maintien.

2. Servofrein selon la revendication 1, **caractérisé en ce que** l'électrovalve est activée soit par le capteur de course, soit par un élément externe.

3. Servofrein selon l'une des revendications 1 à 2, **caractérisé en ce que** le corps du maître cylindre comporte un capteur (35) de pression.

4. Servofrein selon l'une des revendications 1 à 3, **caractérisé en ce que** l'augmentation de la pression dans la chambre arrière commandée par l'électrovalve est définie par une loi d'activation prédéfinie.

5. Servofrein selon la revendication 4, **caractérisé en ce que** la loi d'activation de l'électrovalve est modifiable en fonction de la pression dans la chambre de pression détectée par le capteur de pression.

6. Dispositif de freinage comportant un servofrein selon l'une des revendications 1 à 5, des plaquettes de freins et un disque de freinage, **caractérisé en ce que** les plaquettes de freins sont soumises à l'action d'un moyen de rappel écartant les plaquettes du disque de telle sorte qu'au repos les plaquettes ne soient pas en contact avec le disque.

7. Procédé de fabrication d'un dispositif de freinage, **caractérisé en ce qu'**il comporte un servofrein selon l'une des revendications 1 à 6.

## Claims

1. Brake servo unit (1) comprising, from a brake pedal (2) to a master cylinder (3),
- a control rod (4) sliding along an axis of sliding (5),
- a rear chamber (6) and a front chamber (7) which are separated in a fluid-tight manner by a rigid skirt (8) and a flexible membrane (9),
- a solenoid valve (11) situated on the outside of the brake servo unit,
- a brake servo unit piston (27) that slides as one with the skirt,
a pressure chamber (28) being delimited by the brake servo unit piston, a body (29) of the master cylinder and a piston (30) of the master cylinder,
the solenoid valve comprising a three-way valve (19) comprising an inlet shutter (20) placing the rear chamber in communication with a source (19) of fluid at a higher pressure, and a communication shutter (23) placing the front chamber and the rear chamber in communication with one another,
the solenoid valve being connected by a first duct (12) to the rear chamber and by a second duct (13) to the front chamber,
the brake servo unit comprising a control rod travel sensor (10), the travel sensor being connected to the solenoid valve and controlling activation of the solenoid valve,
**characterized in that** it comprises an annular section (31) situated in the pressure chamber, the said annular section being pressed firstly against a shoulder (32) of the piston (27) of the brake servo unit by a return spring (36) and secondly against the piston (30) of the master cylinder,
the annular section in a fluid-tight manner covering a bushing (33) that is able to move in sliding,
the bushing, situated facing the pressure chamber and the control rod being kept in a rest position under the action of a retaining spring.

2. Brake servo unit according to Claim 1, **characterized in that** the solenoid valve is activated either by the travel sensor or by an external element.

3. Brake servo unit according to one of Claims 1 and 2, **characterized in that** the body of the master cylinder comprises a pressure sensor (35).

4. Brake servo unit according to one of Claims 1 to 3, **characterized in that** the increase in pressure in the rear chamber brought about by the solenoid valve is defined by a predefined activation law.

5. Brake servo unit according to Claim 4, **characterized in that** the solenoid valve activation law can be modified according to the pressure in the pressure chamber as detected by the pressure sensor.

6. Braking device comprising a brake servo unit according to one of Claims 1 to 5, brake pads and a brake disc, **characterized in that** the brake pads are subjected to the action of a return means that moves the pads away from the disc so that, at rest, the pads are not in contact with the disc.

7. Method of manufacturing a brake device, **characterized in that** it comprises a brake servo unit according to one of Claims 1 to 6.

## Patentansprüche

1. Servobremse (1), die ausgehend von einem Bremspedal (2) bis zu einem Hauptzylinder (3) Folgendes aufweist:
- eine Steuerstange (4), die entlang einer Gleitachse (5) gleitet,
- eine hintere Kammer (6) und eine vordere Kammer (7), die in dichter Weise durch eine starre Schürze (8) und eine nachgiebige Membran (9) getrennt sind,
- ein Magnetventil (11), das außerhalb der Servobremse angeordnet ist,
- einen Servobremsenkolben (27), der beim Gleiten fest mit der Schürze verbunden ist, wobei eine Druckkammer (28) durch den Servobremsenkolben, einen Körper (29) des Hauptzylinders und einen Kolben (30) des Hauptzylinders begrenzt ist,
wobei das Magnetventil ein Dreiwegeventil (19) umfasst, das ein Einlassventilelement (20), das die hintere Kammer und eine Fluidquelle (19) mit höherem Druck miteinander verbindet, und ein Verbindungsventilelement (23) aufweist, das die vordere Kammer und die hintere Kammer miteinander verbindet,
wobei das Magnetventil über eine erste Leitung (12) mit der hinteren Kammer und über eine zweite Leitung (13) mit der vorderen Kammer verbunden ist,
wobei die Servobremse einen Sensor (10) zur Erfassung des Wegs der Steuerstange aufweist, wobei der Wegsensor mit dem Magnetventil verbunden ist und eine Aktivierung des Magnetventils steuert,
**dadurch gekennzeichnet, dass** sie einen ringförmigen Abschnitt (31) aufweist, der in der Druckkammer angeordnet ist, wobei der ringförmige Abschnitt zum einen durch eine Rückstellfeder (36) gegen einen Absatz (32) des Kolbens (27) der Servobremse und zum anderen gegen den Kolben (30) des Hauptzylinders gedrückt wird,
wobei der ringförmige Abschnitt eine verschiebbare Hülse (33) in dichter Weise bedeckt,
wobei die Hülse, die gegenüber der Druckkammer und der Steuerstange angeordnet ist, unter der Wirkung einer Rückhaltefeder in der Ruhestellung gehalten ist.

2. Servobremse nach Anspruch 1, **dadurch gekennzeichnet, dass** das Magnetventil von dem Wegsensor oder von einem externen Element aktiviert wird.

3. Servobremse nach einem der Ansprüche 1 bis 2, **dadurch gekennzeichnet, dass** der Körper des Hauptzylinders einen Drucksensor (35) aufweist.

4. Servobremse nach einem der Ansprüche 1 bis 3, **dadurch gekennzeichnet, dass** die durch das Magnetventil gesteuerte Erhöhung des Drucks in der hinteren Kammer durch ein vorbestimmtes Aktivierungsgesetz definiert ist.

5. Servobremse nach Anspruch 4, **dadurch gekennzeichnet, dass** das Gesetz zur Aktivierung des Magnetventils in Abhängigkeit von dem durch den Drucksensor erfassten Druck in der Druckkammer geändert werden kann.

6. Bremsvorrichtung mit einer Servobremse nach einem der Ansprüche 1 bis 5, Bremsklötzen und einer Bremsscheibe, **dadurch gekennzeichnet, dass** die Bremsklötze der Wirkung eines Rückstellmittels ausgesetzt sind, das die Bremsklötze so von der Scheibe wegdrückt, dass die Bremsklötze in der Ruhestellung die Scheibe nicht berühren.

7. Verfahren zur Herstellung einer Bremsvorrichtung, **dadurch gekennzeichnet, dass** sie eine Servobremse nach einem der Ansprüche 1 bis 6 aufweist.
